# EUROPÄISCHE PATENTANMELDUNG

(11) **EP 3 666 128 A1**
(43) Veröffentlichungstag der Anmeldung: **17.06.2020**
(21) Anmeldenummer: 18212330.7
(22) Anmeldetag: 13.12.2018
(51) Int. Cl.: A47G 21/02, G01F 19/00

(54) **DOSIERVORRICHTUNG**

(71) Anmelder: Edelmann GmbH, 89518 Heidenheim (DE)
(72) Erfinder: Nemec, Rolf, 89547 Gerstetten (DE)
(74) Vertreter: Caspary, Karsten

(57) **Zusammenfassung**

Erfindungsgemäß bereitgestellt wird eine faltbare Dosiervorrichtung (1) mit einem Griffbereich (2), einem Mittelbereich (3) und einem Schüttbereich (4), die entlang einer Längsachse (5) der Dosiervorrichtung (1) hintereinander angeordnet und jeweils mittels einer quer verlaufenden Falzlinie (6, 7) verbunden sind, wobei der Schüttbereich (4) seitlich mindestens eine Stützlasche (8) aufweist, wobei die Dosiervorrichtung (1) einen flachen, ungefalteten Zustand und einen gefalteten Zustand umfasst, wobei im gefalteten Zustand die mindestens eine Stützlasche (8) mit dem Mittelbereich (3) oder dem Griffbereich (2) derart zusammenwirkt, dass Schüttbereich (4) und Mittelbereich (3) in einem vorbestimmten Winkel (α) zueinander festgelegt sind, und der Mittelbereich (3) und der Griffbereich (2) in einem vorbestimmten Winkel zueinander festlegbar sind.

## Beschreibung

Die vorliegende Erfindung betrifft eine Dosiervorrichtung, insbesondere eine faltbare Dosiervorrichtung, wie sie verschiedenen, in flüssiger, granulatartiger oder pulverartiger Form hergestellten Produkten beigefügt werden, die üblicherweise in Tüten, Bechern oder auch faltbaren Behältern verkauft werden.

Derartige Dosiervorrichtungen gibt es beispielsweise aus Kunststoff. Kunststoff ist jedoch ein nicht biologisch abbaubares Material, weshalb seine Herstellung und auch Verwendung problematisch für die Umwelt ist. Es sind auch faltbare Löffel oder Messer bekannt, die zum Teil aus Kartonmaterial gebildet sind, beispielsweise aus der US 1,521,768, der US 3,222,785, der US 3,828,999, der US 9,750,362 B2, der US 2014/0238987 A1 und der DE 20 2006 005 439 U1. Diese bekannten Vorrichtungen weisen jedoch einige Nachteile auf, insbesondere den, dass die daraus gefalteten Löffel zur Dosierung schlecht geeignet sind, weil ihr Löffelbereich nicht stabil ist.

Es ist daher die Aufgabe der vorliegenden Erfindung, eine verbesserte faltbare Dosiervorrichtung bereitzustellen, die die Nachteile des Standes der Technik zumindest teilweise überwindet, im gefalteten Zustand eine möglichst stabile Konstruktion aufweist und einfach sowie kostengünstig herstellbar ist.

Diese Aufgabe wird durch den Gegenstand mit den Merkmalen des Anspruchs 1 gelöst. Vorteilhafte Ausführungsformen sind in den abhängigen Ansprüchen beschrieben.

Erfindungsgemäß wird eine faltbare Dosiervorrichtung mit einem Griffbereich, einem Mittelbereich und einem Schüttbereich bereitgestellt, die entlang einer Längsachse der Dosiervorrichtung hintereinander angeordnet und jeweils mittels einer quer verlaufenden Falzlinie verbunden sind, wobei der Schüttbereich seitlich mindestens eine Stützlasche aufweist, wobei die Dosiervorrichtung einen flachen, ungefalteten Zustand und einen gefalteten Zustand umfasst, wobei im gefalteten Zustand die mindestens eine Stützlasche mit dem Mittelbereich oder dem Griffbereich derart zusammenwirkt, dass Schüttbereich und Mittelbereich in einem vorbestimmten Winkel zueinander festgelegt sind, und der Mittelbereich und der Griffbereich in einem vorbestimmten Winkel zueinander festlegbar sind. Eine derartige Dosiervorrichtung ist einfach herstellbar, z. B. aus recyclebarem Kartonmaterial, und weist einen definierten Schüttbereich im gefalteten Zustand auf, der eine zuverlässige Mengendosierung bietet.

Bevorzugt weist der Mittelbereich seitlich mindestens eine Seitenlasche auf, wobei im gefalteten Zustand die mindestens eine Seitenlasche mit dem Griffbereich zusammenwirkt. Damit wird nicht nur ein stabiler Schüttbereich, sondern auch ein insgesamt stabiles Gebilde der Dosiervorrichtung geschaffen, um zuverlässig definierte Mengen an Schüttgut zu messen, zu halten und zu transportieren.

Dabei ist es von Vorteil, wenn das Zusammenwirken der mindestens einen Stützlasche und dem Mittelbereich oder dem Griffbereich mittels einer Steckverbindung, einer Klebverbindung, einer Haftverbindung oder mittels einer magnetischen Verbindung erfolgt. Eine besonders einfache Konstruktion bietet eine Steckverbindung, wobei die mindestens eine Stützlasche an ihrem Ende derart ausgebildet ist, dass sie mit einem entsprechenden Schlitz oder einer Ausnehmung im Mittelbereich oder im Griffbereich in Eingriff bringbar ist, um die Verbindung zu bewirken. Derartige Steckverbindungen sind beispielsweise im Faltschachtelbereich aus Kartonmaterial üblich, wobei dort auch Klebverbindungen, Haftverbindungen oder magnetische Verbindungen für eine massenweise Herstellung geeignet sind.

In gleicher Weise ist es bevorzugt, dass das Zusammenwirken der mindestens einen Seitenlasche und dem Griffbereich mittels Steckverbindung, Klebverbindung, Haftverbindung oder einer magnetischen Verbindung erfolgt. Auch hierbei ist bevorzugt, dass die mindestens eine Seitenlasche an ihrem Ende derart ausgebildet ist, dass sie mit einem entsprechenden Schlitz oder einer Ausnehmung im Griffbereich in Eingriff bringbar ist, um die Verbindung zu bewirken. Die oben genannten Vorteile für die Verbindung der Stützlasche gelten analog auch für die Seitenlaschenverbindung mittels Steckverbindung.

Mit weiterem Vorteil weist der Griffbereich im Wesentlichen in Längsrichtung der Dosiervorrichtung zwei Falzlinien auf. Diese dienen dazu, den Griffbereich im gefalteten Zustand zu verschmälern, sodass sich eine verbesserte Handhabung ergibt. Die beiden Falzlinien müssen nicht über den gesamten Griffbereich parallel zueinander verlaufen, sondern können beispielsweise in Richtung des Übergangs zum Mittelbereich voneinander weg verlaufen.

Mit weiterem Vorteil weist der Schüttbereich mindestens eine Falzlinie auf, die bevorzugt im Wesentlichen in Längsrichtung verläuft. Derartige Falzlinien definieren und erleichtern das Falten des entsprechenden Bereichs und tragen damit zur Stabilität und zur Sicherung der Dosiereigenschaften der erfindungsgemäßen Dosiervorrichtung bei.

Mit Vorteil weist der Schüttbereich zwei Stützlaschen und eine Frontlasche auf, die im gefalteten Zustand derart zusammenwirken, dass zusammen mit dem Mittelbereich ein im Wesentlichen geschlossener Schüttraum ausgebildet wird. Dabei ist es bevorzugt, wenn das Zusammenwirken der zwei Stützlaschen mit dem Mittelbereich oder mit der Frontlasche mittels Steckverbindung, Klebverbindung, Haftverbindung oder mittels magnetischer Verbindung erfolgt. Ein derartiger geschlossener Schüttraum kann Schüttgut noch zuverlässiger aufnehmen und ist darüber hinaus zur Angabe von Mengenanzeigen geeignet, die für eine exakte Dosierung notwendig sind.

Weiterhin vorteilhaft ist es, dass die Dosiervorrichtung aus einem einstückigen flachen Zuschnitt gebildet ist. Ein derartiger Zuschnitt ist vorteilhafterweise aus Kartonmaterial oder aus Kunststoff oder auch einer Kombination aus beiden Materialien gebildet. Damit kann beispielsweise der flache Zuschnitt der Dosiervorrichtung zusammen mit dem flachen Zuschnitt einer Faltschachtel zusammen auf dem gleichen Materialbogen ausgebildet sein. Damit lässt sich Material nutzen, das in einigen Fällen nicht zur Herstellung von Produkten vorgesehen ist, wodurch sich Kostenvorteile ergeben.

Sowohl Kartonmaterial als auch Kunststoffmaterial lassen sich mit entsprechenden Falzlinien, Rilllinien, Ausnehmungen, Ausstanzungen und dergleichen mit vertretbarem Aufwand versehen, sodass Endverbraucher, die ein Produkt mit beigefügter faltbarer Dosiervorrichtung erwerben, die Dosiervorrichtung ohne Weiteres in ihren bestimmungsgemäßen gefalteten Zustand bringen können.

Mit weiterem Vorteil ist die mindestens eine Stützlasche derart ausgebildet, dass das vom Schüttbereich im gefalteten Zustand haltbare Volumen im Wesentlichen einstellbar ist. Durch die Auswahl der Größe der Stützlasche, d. h. ihrer Länge und ihrer Breite, lässt sich das haltbare Volumen definieren. Dies gilt für die Ausführungsform mit oder ohne Frontlasche.

Wie bereits oben angedeutet, umfasst die vorliegende Erfindung auch einen Materialbogen mit einem Zuschnitt einer Faltschachtel und einem Zuschnitt der Dosiervorrichtung, wie oben beschrieben. Der Materialboden ist vorzugsweise aus Karton oder Kunststoff gebildet.

Weitere Vorteile und Einzelheiten der vorliegenden Erfindung ergeben sich aus der nachfolgenden Beschreibung der Figuren, in denen:
- Fig. 1: einen flachen Zuschnitt einer bevorzugten Ausführungsform der erfindungsgemäßen Dosiervorrichtung zeigt,
- Fig. 2: eine perspektivische Ansicht der Dosiervorrichtung gemäß Fig. 1 im gefalteten Zustand in einer ersten Blickrichtung zeigt und
- Fig. 3: eine perspektivische Ansicht der Dosiervorrichtung aus Fig. 1 in einer zweiten Blickrichtung von unten zeigt.

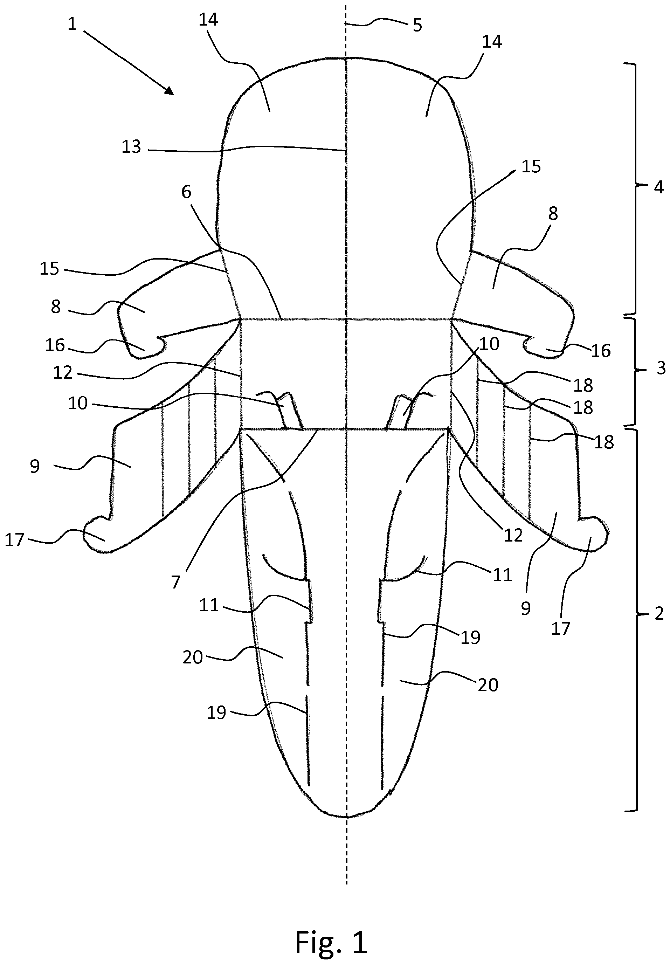

Fig. 1 zeigt einen flachen Zuschnitt einer bevorzugten Ausführungsform der erfindungsgemäßen Dosiervorrichtung 1. Entlang einer Längsachse 5, die in Fig. 1 gestrichelt dargestellt ist, sind ein Griffbereich 2, ein Mittelbereich 3 sowie ein Schüttbereich 4 in der Reihenfolge von unten nach oben angeordnet. Der Schüttbereich 4 ist an einer ersten Querfalzlinie 6 mit dem Mittelbereich 3 verbunden, und dieser Mittelbereich 3 ist über eine zweite Querfalzlinie 7 mit dem Griffbereich 2 verbunden.

Im Schüttbereich 4 teilt eine mittlere Falzlinie 13, die entlang der Längsachse 5 verläuft, den Schüttbereich 4 symmetrisch in zwei Schüttflächen 14, die jeweils an ihrem äußeren Rand in der Nähe des Mittelbereichs 3 eine Stützlasche 8 aufweisen, die mit der Schüttfläche 14 über eine Falzlinie 15 verbunden sind. Es können im Schüttbereich 4 auch mehrere Falzlinien ausgebildet sein, die im gefalteten Zustand bei der Definition des Schüttvolumens im Schüttbereich 4 unterstützen.

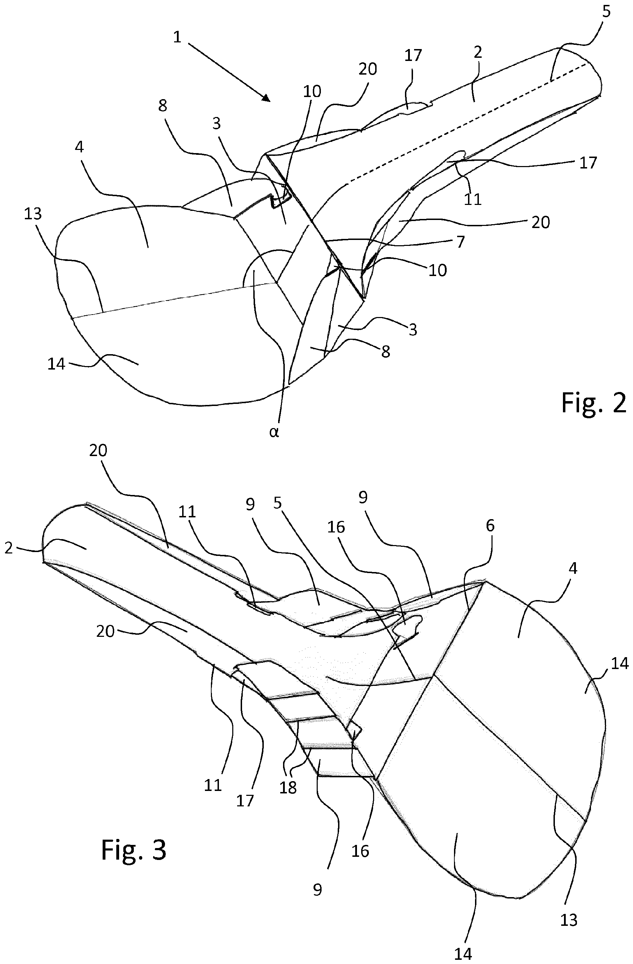

Die Stützlasche 8 erstreckt sich nahezu senkrecht zur Längsachse 5 der Dosiervorrichtung 1 und weist an ihrem Ende in der zum Mittelbereich 3 gerichteten Richtung einen Vorsprung 16 auf, der dazu eingerichtet ist, in eine Ausnehmung bzw. einen Schlitz 10 einzugreifen, die bzw. der dazu passend im Mittelbereich 3 ausgebildet ist. Die Einzelheiten der Faltung der erfindungsgemäßen Dosiervorrichtung 1 werden weiter unten unter Bezugnahme auf die Figuren 2 und 3 beschrieben.

Seitlich an dem Mittelbereich 3 ist auf jeder Seite der Längsachse 5 eine Seitenlasche 9 über eine Falzlinie 12 angelenkt. Die Seitenlasche 9 ist flügelartig ausgebildet und weist an ihrem zu dem Griffbereich 2 hin gerichteten Ende einen Vorsprung 17 auf, der dazu eingerichtet ist, in einen dazu passenden Schlitz 11 bzw. eine dazu passende Ausnehmung im Griffbereich 2 einzugreifen. Damit die Seitenlasche 9 in ihrer Längserstreckung zumindest teilweise gebogen bzw. gefaltet und an die Kontur des Griffbereichs angepasst werden kann, weist sie mindestens eine, im Wesentlichen zur Falzlinie 12 parallele Falzlinie 18 auf.

Der Griffbereich 2 weist im Wesentlichen parallel zur und auf jeder Seite der Längsachse 5 ein Grifffeld 20 auf, in dessen ungefährer Mitte eine Längsfalzlinie 19 angeordnet ist, die im oberen Abschnitt zum Mittelbereich 3 hin jeweils nach außen gewölbt ist. Etwa in der Mitte weist der Griffbereich 2 in der Nähe der Längsfalzlinien 19 liegend einen Schlitz bzw. eine Ausnehmung 11 auf, der bzw. die dazu eingerichtet ist, zum Zwecke der Steckverbindung mit dem Vorsprung 17 der Seitenlasche 9 ineinander zu greifen, wie es nachfolgend unter Bezugnahme auf die Figuren 2 und 3 ausführlich beschrieben ist. Gemäß der bevorzugten Ausführungsform weist der Zuschnitt aus Fig. 1 eine Länge von etwa 8 cm bis etwa 20 cm auf, bevorzugt von etwa 12 cm bis etwa 15 cm.

Fig. 2 zeigt in einer perspektivischen Ansicht die bevorzugte Ausführungsform der erfindungsgemäßen Dosiervorrichtung 1 in einem gefalteten Zustand. Deutlich ist zu erkennen, wie der Schüttbereich 4 bezüglich des Mittelbereichs 3 geometrisch festgelegt ist, und zwar so, dass sich zwischen den Schüttflächen 14 und dem Mittelbereich 3 ein Winkel α bildet, der in der bevorzugten Ausführungsform im Wesentlichen 90° beträgt. Grundsätzlich ist es möglich, anhand der Geometrie der Stützlaschen 8 diesen Winkel α zu verändern, bevorzugt liegen die Werte für α im Bereich von 70° bis 110°. Der Schüttbereich 4 ist entlang der Mittelfalzlinie 13 etwas aufgebogen, d. h. die beiden Schüttflächen 14 bilden einen Winkel von etwas weniger als 180°. Damit wird der Schüttbereich 4 zusätzlich stabilisiert. Die Faltung entlang der Mittelfalzlinie 13 kann weggelassen werden; alternativ können weitere Falzlinien im Schüttbereich 4 vorhanden sein.

Die Festlegung erfolgt durch seitliches Einklappen der Stützlaschen 8 bezüglich der Schüttflächen 14 sowie durch Aufrichten des Mittelbereichs 3 bezüglich des Schüttbereichs 4 und Ineinandergreifen mit dem Mittelbereich 3. Im Zuge der Aufrichtung nähern sich die Vorsprünge 16 der Stützlaschen 8 den im Mittelbereich 3 ausgebildeten Ausnehmungen 10 bzw. Schlitzen 10 an und können anschließend in diese eingreifen. Durch die hakenartige Geometrie des Vorsprungs 16 mit einer entsprechenden Hinterschneidung, wodurch sich eine etwas längere Ausdehnung ergibt als die Länge des Schlitzes 10 im Mittelbereich 3, greifen die Elemente derart ineinander, dass sie nur mit entsprechend großem Druck wieder voneinander entfernt werden können. Die Geometrie des Vorsprungs 16 und der Ausnehmung 10 ist folglich derart ausgelegt und eingerichtet, dass eine Beladung der Schüttflächen 14 im Schüttbereich 4 eine Kraft ausübt, die wesentlich geringer ist als die Kraft, die aufgewendet werden muss, um die in Eingriff stehenden Elemente 10, 16 wieder voneinander zu trennen. Die Eigenspannung des Bogenmaterials wirkt einer Auflösung des Eingriffs ebenfalls entgegen, sodass eine stabile Verbindung der Stützlaschen 8 mit dem Mittelbereich 3 entsteht.

Ähnlich zur Verbindung der Stützlaschen 8 mit dem Mittelbereich 3 erfolgt auch die Verbindung zwischen den Seitenlaschen 9 mit dem Griffbereich 2. Dazu wird jeweils die Seitenlasche 9 an der Falzlinie 12 um im Wesentlichen 90° gefaltet, und zwar in die entgegengesetzte Richtung wie die Stützlasche 8. Bei aufgefaltetem Schüttbereich 4 bewegt sich demnach jede Seitenlasche 9 von dem Schüttbereich 4 weg. Auch der Griffbereich 2 wird entlang der zweiten Querfalzlinie 7 aufgefaltet, und zwar auch hier entgegengesetzt zur Faltung des Schüttbereichs 4 bezüglich des Mittelbereichs 3. Damit ergibt sich eine Z-artige Faltung der drei zentralen Bereiche, die in Längsrichtung entlang der Längsachse 5 hintereinander angeordnet sind.

Anschließend werden die beiden Grifffelder 20 jeweils entlang der Längsfalzlinien 19 nach unten gefaltet, d. h. in Richtung der Unterseite der Dosiervorrichtung. Die Innenseiten der Seitenlaschen 9 liegen nun auf der Oberseite der Grifffelder 20 an, und die Vorsprünge 17 nähern sich jeweils dem entsprechenden Schlitz bzw. der entsprechenden Ausnehmung 11 auf dem Griffbereich 2 an. Die Ausrichtung des Vorsprungs 17 ist derart, dass er in dem Schlitz 11 eingesteckt werden kann, d. h. bei Annäherung der Seitenlasche 9 an das Grifffeld 20 zeigt der Vorsprung 17 im Wesentlichen nach unten. Die Geometrie des Vorsprungs 17 ist mit den Dimensionen des Schlitzes 11 abgestimmt, d. h. wie oben beschrieben weist auch der Vorsprung 17 eine Nase mit einer entsprechenden Hinterschneidung auf, sodass nach dem Einstecken des Vorsprungs 17 in den Schlitz 11 die Rückstellungskräfte des gefalteten Materials ein Herausrutschen des Vorsprungs 17 aus dem Schlitz bzw. der Ausnehmung 11 verhindern und damit für eine stabile Verbindung zwischen der Seitenlasche 9 und dem Griffbereich 2 sorgen.

Die Falzlinien 18 auf der Seitenlasche 9 dienen dazu, die Seitenlasche 9 leicht zu verformen, sodass ihre Fläche auf dem gekrümmten Grifffeld 20 anliegt. Die Seitenlasche 9 schmiegt sich auf diese Weise an die Krümmung der Grifffelder 20 von außen an.

Fig. 3 zeigt in perspektivischer Ansicht die Dosiervorrichtung aus Fig. 2 von unten betrachtet. Gut erkennt man, wie die Vorsprünge 16 der Stützlaschen 8 in die Schlitze 10 des Mittelbereichs 3 eingreifen und die Steckverbindung bewirken. Gleiches gilt für die Steckverbindung zwischen den Seitenlaschen 9 bzw. deren Vorsprüngen 17, die in die Schlitze 11 des Griffbereichs 2 greifen. Auch die Faltung der Grifffelder 20 im Griffbereich 2 ist zu sehen.

Durch die stabile Verbindung mittels der Stützlaschen 8 bzw. der Seitenlaschen 9 zwischen den entsprechenden Bereichen lässt sich mit der Dosiervorrichtung der dargestellten Ausführungsform ein löffelartiges Gebilde erzeugen, mit dem Schüttgut wie z. B. ein Pulver entsprechend dosiert und transportiert werden kann.

In leichter Abänderung der bevorzugten Ausführungsform aus Fig. 2 bzw. Fig. 3 ist es auch möglich, die Seitenlaschen 9 derart zu falten und mit dem Griffbereich 2 in Eingriff zu bringen, sodass die Grifffelder 20 außen und die Seitenlaschen 9 innen liegen. Dies bedeutet für die Vorsprünge 17, dass sie von unten in die Ausnehmungen bzw. Schlitze 11 eingreifen müssen. Grundsätzlich ist festzustellen, dass die erfindungsgemäße Dosiervorrichtung bereits ohne Seitenlaschen funktionsfähig ist, d. h. wenn nur die Stützlaschen 8 mit dem Griffbereich 3 in Eingriff stehen. Weiterhin ist zu bemerken, dass neben den in Bezug auf die bevorzugte Ausführungsform dargestellten Steckverbindungen auch andere Verbindungen möglich sind, wie beispielsweise Kleb-, Haft- oder magnetische Verbindungen.

Durch die Art der Verbindung ist bestimmt, ob die erfindungsgemäße Dosiervorrichtung vom gefalteten in den ungefalteten Zustand gebracht werden kann, z. B. um sie wieder flach verpacken zu können. Die beschriebenen Steckverbindungen sind im Prinzip lösbar.

Die obige Beschreibung der bevorzugten Ausführungsform bezieht sich auf Kartonmaterial als bevorzugt verwendetes Material für die erfindungsgemäße Dosiervorrichtung. Auch die Verwendung anderer Materialien, wie z. B. Kunststoff oder Mischmaterialien, beispielsweise durch entsprechende Beschichtung mit Kunststoff oder mit Metall, ist möglich.

Mit dem erfindungsgemäßen Gegenstand wurde eine faltbare Dosiervorrichtung bereitgestellt, die eine einfache Konstruktion aufweist, kostengünstig herstellbar ist und eine dauerhafte und zuverlässige Dosierung ermöglicht.

## Patentansprüche

1. Faltbare Dosiervorrichtung (1) mit
einem Griffbereich (2), einem Mittelbereich (3) und einem Schüttbereich (4), die entlang einer Längsachse (5) der Dosiervorrichtung (1) hintereinander angeordnet und jeweils mittels einer quer verlaufenden Falzlinie (6, 7) verbunden sind,
wobei der Schüttbereich (4) seitlich mindestens eine Stützlasche (8) aufweist,
wobei die Dosiervorrichtung (1) einen flachen, ungefalteten Zustand und einen gefalteten Zustand umfasst, wobei im gefalteten Zustand:
- die mindestens eine Stützlasche (8) mit dem Mittelbereich (3) oder dem Griffbereich (2) derart zusammenwirkt, dass Schüttbereich (4) und Mittelbereich (3) in einem vorbestimmten Winkel (α) zueinander festgelegt sind, und
- der Mittelbereich (3) und der Griffbereich (2) in einem vorbestimmten Winkel zueinander festlegbar sind.

2. Dosiervorrichtung (1) nach Anspruch 1, **dadurch gekennzeichnet, dass** der Mittelbereich (3) seitlich mindestens eine Seitenlasche (9) aufweist, wobei im gefalteten Zustand die mindestens eine Seitenlasche (9) mit dem Griffbereich (2) zusammenwirkt.

3. Dosiervorrichtung (1) nach einem der vorhergehenden Ansprüche, **dadurch gekennzeichnet, dass** das Zusammenwirken der mindestens einen Stützlasche (8) und dem Mittelbereich (3) oder dem Griffbereich (2) mittels Steckverbindung, mittels Klebverbindung, mittels Haftverbindung oder mittels magnetischer Verbindung erfolgt.

4. Dosiervorrichtung (1) nach einem der vorhergehenden Ansprüche, **dadurch gekennzeichnet, dass** die mindestens eine Stützlasche (8) an ihrem Ende derart ausgebildet ist, dass sie mit einem entsprechenden Schlitz (10) oder einer Ausnehmung im Mittelbereich (3) oder im Griffbereich (2) in Eingriff bringbar sind, um die Verbindung zu bewirken.

5. Dosiervorrichtung (1) nach einem der Ansprüche 2 bis 4, **dadurch gekennzeichnet, dass** das Zusammenwirken der mindestens einen Seitenlasche (9) und dem Griffbereich (2) mittels Steckverbindung, mittels Klebverbindung, mittels Haftverbindung oder mittels magnetischer Verbindung erfolgt.

6. Dosiervorrichtung (1) nach einem der Ansprüche 2 bis 5, **dadurch gekennzeichnet, dass** die mindestens eine Seitenlasche (9) an ihrem Ende derart ausgebildet ist, dass sie mit einem entsprechenden Schlitz (11) oder einer Ausnehmung im Griffbereich (2) in Eingriff bringbar sind, um die Verbindung zu bewirken.

7. Dosiervorrichtung (1) nach einem der vorhergehenden Ansprüche, **dadurch gekennzeichnet, dass** der Griffbereich (2) im Wesentlichen in Längsrichtung der Dosiervorrichtung (1) zwei Falzlinien (19) aufweist.

8. Dosiervorrichtung (1) nach einem der vorhergehenden Ansprüche, **dadurch gekennzeichnet, dass** der Schüttbereich (4) mindestens eine Falzlinie (13) aufweist, die bevorzugt im Wesentlichen in Längsrichtung verläuft.

9. Dosiervorrichtung (1) nach einem der vorhergehenden Ansprüche, **dadurch gekennzeichnet, dass** der Schüttbereich (4) zwei Stützlaschen (8) und eine Frontlasche aufweist, die im gefalteten Zustand derart zusammenwirken, dass zusammen mit dem Mittelbereich (3) ein im Wesentlichen geschlossener Schüttraum ausgebildet wird.

10. Dosiervorrichtung (1) nach Anspruch 9, **dadurch gekennzeichnet, dass** das Zusammenwirken der zwei Stützlaschen (8) mit dem Mittelbereich (3) oder mit der Frontlasche mittels Steckverbindung, mittels Klebverbindung, mittels Haftverbindung oder mittels magnetischer Verbindung erfolgt.

11. Dosiervorrichtung (1) nach einem der vorhergehenden Ansprüche, **dadurch gekennzeichnet, dass** sie aus einem einstückigen flachen Zuschnitt gebildet ist.

12. Dosiervorrichtung (1) nach Anspruch 11, **dadurch gekennzeichnet, dass** der Zuschnitt aus Kartonmaterial oder aus Kunststoff oder einer Kombination daraus gebildet ist.

13. Dosiervorrichtung (1) nach einem der vorhergehenden Ansprüche, **dadurch gekennzeichnet, dass** die mindestens eine Stützlasche (8) derart ausgebildet ist, dass das vom Schüttbereich (4) im gefalteten Zustand haltbare Volumen im Wesentlichen einstellbar ist.

14. Materialbogen umfassend einen Zuschnitt einer Faltschachtel und einen Zuschnitt der Dosiervorrichtung (1) nach einem der vorhergehenden Ansprüche.

15. Materialbogen nach Anspruch 14, **dadurch gekennzeichnet, dass** das Material Karton oder Kunststoff ist.
